# EUROPEAN PATENT APPLICATION

(11) **EP 1 380 978 A1**
(43) Date of publication of application: **14.01.2004**
(21) Application number: 02712296.9
(22) Date of filing: 08.02.2002
(51) Int. Cl.: G06F 17/60

(54) **ESTIMATION EVALUATING SYSTEM**

(30) Priority: 20.02.2001 JP 2001043388
(71) Applicant: Honda Giken Kogyo Kabushiki Kaisha, Minato-ku, Tokyo 107-8556 (JP)
(72) Inventor: IWAI, Kazuhiro, K. K. Honda Gijutsu Kenkyusho, Wako-shi, Saitama 351-0193 (JP); NASU, Tomio, K. K. Honda Gijutsu Kenkyusho, Wako-shi, Saitama 351-0193 (JP); WADA, Kazuhiro, K. K. Honda Gijutsu Kenkyusho, Wako-shi, Saitama 351-0193 (JP); KAWANO, Akio, K. K. Honda Gijutsu Kenkyusho, Wako-shi, Saitama 351-0193 (JP)
(74) Representative: Quinterno, Giuseppe
(86) International application number: PCT/JP2002/001081
(87) International publication number: WO 2002/067162

(57) **Abstract**

The present invention provides an estimate evaluation system which compares between the estimated prices of a product submitted from a plurality of manufacturers located in different countries or different currency markets to determine its propriety and can thus negotiate with the manufacturers about some discount.

Provided in the country A of a purchaser are a group of man/machine interfaces including a purchase section terminal (11), a production management terminal (12), and a design development terminal (13), a production management system server (14), an estimate system server (15), a currency exchange table server (16), a country A production cost database (1a), a country B production cost database (1b), and a country C production cost database (1c). The production cost database stores the production cost factors and cost data on each country.

## Description

### Technical Field

The present invention relates to an estimate evaluation system for evaluating a plurality of estimated prices for identical products and particularly to an estimate evaluation system arranged capable of positively evaluating a plurality of estimated prices submitted from various manufacturing sectors which are located in different countries or different currency markets.

### Background Art

It is common, as disclosed in Japanese Patent Laid-open Publication (Heisei)9-190945 or 9-231265, to determine the finally estimated, reasonable price of a product from the total cost of materials, processing step, and assembling step.

Even as it is desirable that the estimated price is compared with other estimated prices for judging its propriety and thus used for further negotiation about some discount, its system has not been developed so far.

As components of a general-purpose type are now available from worldwide areas, their manufacturers may be located in different countries or different currency markets. For example, while one product is designed and planned in one country A, it may be assembled in another country B. Alternatively, while a product is designed in the country A, its components may be purchased and assembled in the country B. For another instance, a product may be assembled to its half-finished form in a country C and then transferred into the country B where it is completed.

For such a case, it is a common practice to convert the estimated price in another currency of a product submitted by each manufacturer into the currency of the purchaser which is then compared with the other estimated prices from different manufacturers or its own market to determine proprietary supplier.

The prior art permits the purchaser to receive only the finally estimated price of a product from its manufacturer with no further details of the estimate. Even if the estimated price comprises a material cost, a processing cost, and an assembling cost, the purchaser can hardly be informed of the material cost, the processing cost, and the assembling cost separately. This will inhibit the purchaser from precisely judging whether the estimated price is reasonable or not and duly negotiating with a supplier about some discount.

It is hence an object of the present invention to provide an estimate evaluation system which compares between the estimated prices of a product submitted from a plurality of manufacturers located in different countries or different currency markets to determine its propriety and can thus negotiate with the manufacturers about some discount.

### Disclosure of Invention

For achievement of the above obj ect of the present invention, an estimate evaluation system having a production cost database for storing the cost data of a product based on each production cost factor, an estimating means for calculating an estimated price of the product from the cost data stored in the production cost database, and an estimated price output means for outputting the estimated price is provided in that the production cost database stores the cost data of the product based on each production cost factor at each manufacturing site, the estimating means calculates the estimated price of the product for each manufacturing site, and the estimated price output means output the estimated price of the product for each manufacturing site.

According to the present invention, the relationship between the cost data and the production cost factors at each manufacturing site can dominantly be managed by the purchaser, thus allowing the comparison of the estimated price between different manufacturing sites. Also, as the production cost database of each manufacturing site is constantly updated for modifying the estimated price, its cost data remain up-to-date.

### Brief Description of Drawings

Fig.1 is a block diagram of a first embodiment of an estimate evaluation system according to the present invention.
Fig.2 schematically illustrates an example of the data structure in the production cost database.
Figs.3A, 3B and 3C schematically illustrate the contents of the production cost database.
Fig.4 illustrates an indication example of the estimate result for each product.
Figs. 5A, 5B and 5C illustrate an indication example of the estimate result for each production cost factor.
Fig.6 is a block diagram of a second embodiment of the estimate evaluation system according to the present invention.

### Best Mode for Embodying the Invention

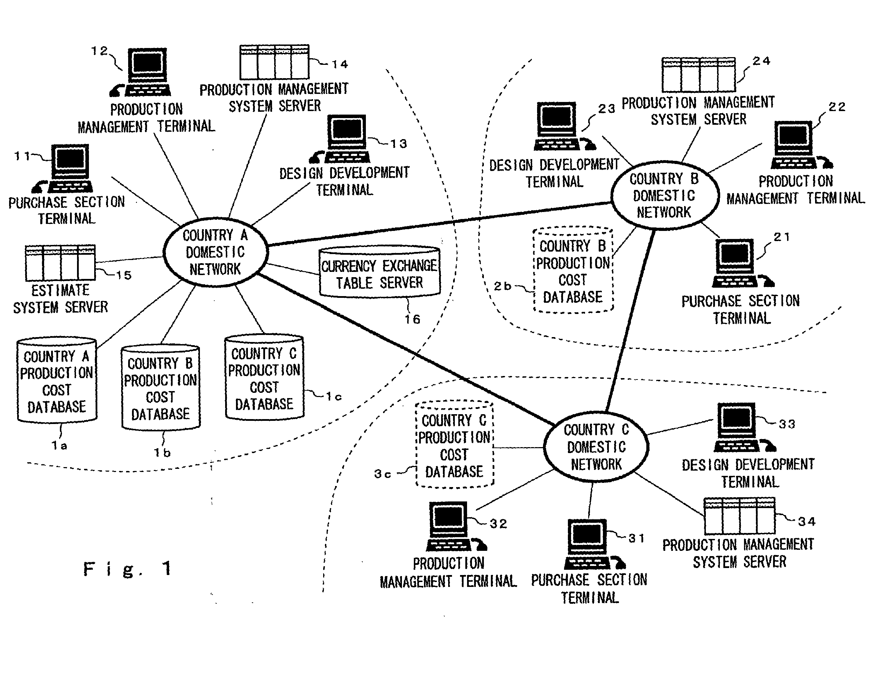

The present invention will be described in more details referring to the relevant drawings. Fig. 1 is a block diagram of a first embodiment of an estimate evaluation system according to the present invention.

Provided in the country A of a purchaser are a group of man/machine interfaces including a purchase section terminal 11, a productionmanagement terminal 12, and a design development terminal 13, a production management system server 14, an estimate system server 15, a currency exchange table server 16, a country A production cost data base 1a, a country B production cost database 1b, and a country C production cost database 1c.

Provided in the country B of one of the manufacturers are a group of man/machine interfaces including a purchase section terminal 21, a production management terminal 22, and design development terminal 23, a production management system server 24, and a country B production cost database 2b. The country B production cost database 1b provided in the country A is a replica of the country B production cost database 2b.

Provided in the country C of one of the other manufacturers are a group of man/machine interfaces including a purchase section terminal 31, a production management terminal 32, and design development terminal 33, a production management system server 34, and a country C production cost database 3c. The country C production cost database 1c provided in the country A is a replica of the country C production cost database 3c.

The country A production cost database 1a stores various production cost factors, such as materials, processing methods, assembling methods, shapes, or processing accuracy, based on which the estimated cost is determined, in relation to the production cost in the country A.

The country B production cost database 1b (or 2b) stores the production cost at each manufacturer in the country B corresponding to the production cost factors.

The country C production cost database 1c (or 3c) stores the production cost at each manufacturer in the country C corresponding to the production cost factors.

The currency exchange table 16 in the country A stores a data table for changing the currency of both the countries B and C into that of the country A. The data registered and stored in the country B production cost database 2b provided in the country B and the country C production cost database 3c provided in the country C are periodically copied to the country B production cost database (replica) 1b and the country C production cost database (replica) 1c respectively provided in the country A for matching between two counterparts.

The design development section of each country designs a product or a half product satisfying the predetermined specifications and notifies the purchase sections and production management sections of the materials, processing methods, and arrangement of the product from the design development terminal 13, 23, or 33.

The purchase section of each country when receiving a data of the materials from the design development terminals 13, 23, and 33 selects and negotiates with suppliers to determine the estimated price of each material which is then transferred from the purchase section terminal 11, 21, or 31 to the production cost database 1a, 2b, or 3c respectively for registering and storage. In response to the data of the processing methods and arrangement of the product received from the design development terminals 13, 23, or 33, the production management section calculates the cost of the components and the cost of processing and assembling the half-product or product which is then transferred from its production management terminal 21, 22, or 23 to the production cost database 1a, 2b, or 3c respectively for registering and storage.

Fig. 2 schematically illustrates an example of the data structure in the country B production cost database 2b where the materials, processing methods, and assembling methods are registered with their cost in the currency of the country B (e. g. Thai bahts in Thailand). The cost may be varied depending on the quantity to be purchased. In this embodiment, the price of a material q is different between a number of less than 1000 and a number of 1000 or more.

The estimated price of a product manufactured by subjecting a material p to a processing step s and an assembling step v can be calculated from summing the unit costs of components.

A procedure of the purchaser in the country A determining the manufacturing site for a product Q will now be explained. It is assumed that the product Q is manufactured by subjecting the material q to a processing step q and an assembling step q.

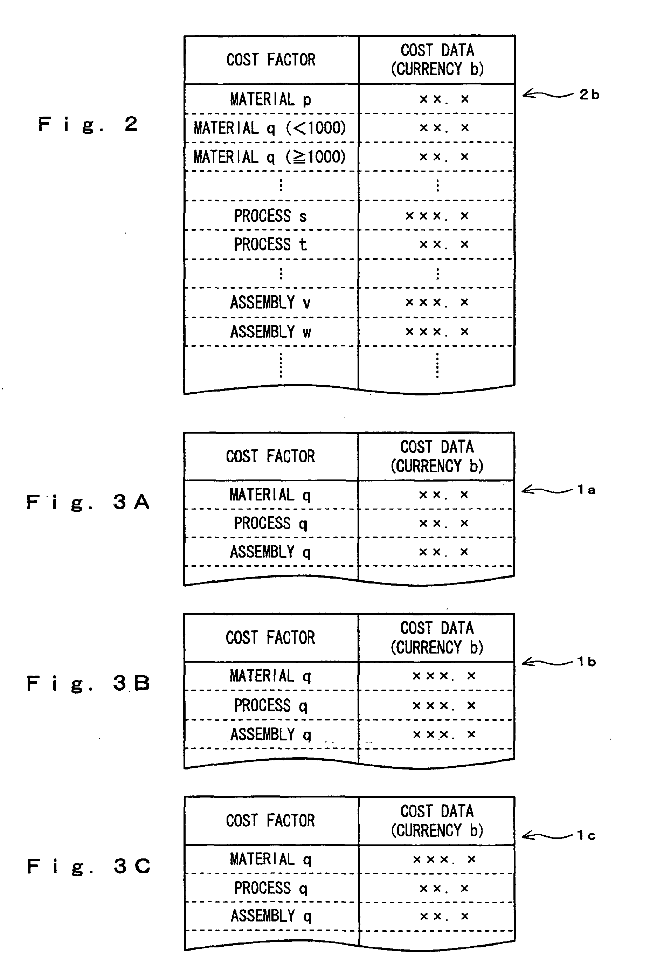

Figs. 3A, 3B and 3C schematically illustrate the contents of the country A production cost database 1a, the counter B production cost database 1b, and the country C production cost database 1c for manufacturing the product Q, including the cost of the material q, the cost of implementing the processing step q, and the cost of implementing the assembling step q in each country.

When the estimated price of the product Q using the material q, the processing step q, and the assembling step q is requested by the operator manipulating the purchase section terminal 11 in the country A, the estimate system server 15 accesses and receives the cost data of the cost factor data in each manufacturing site from the production cost data bases 1a, 1b, and 1c. Simultaneously, the estimate system server 15 accesses and receives the currency exchange data between the currency of the country A and the currency of the countries B and C from the currency exchange table 16. Each price received from the country B production cost database 1b and the country C production cost database 1c is converted into the currency of the country A. As a result, the cost data at each manufacturing site can be transferred from the estimate system server 15 to the purchase section terminal 11 where they are displayed.

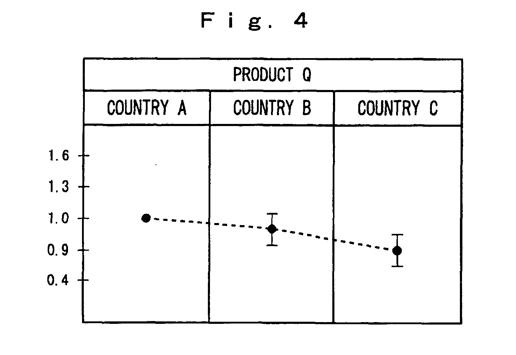

Fig. 4 illustrates an example of the estimate result received from the three different countries and displayed at the purchase section terminal 11.

In this embodiment, the estimated price of the product Q at each manufacturing site or country is displayed while the same at the purchaser counter A is expressed by the absolute value "1.0". As apparent, the price is he lowest in the country C and the country B and the country A follow. The estimated prices submitted from the countries B and C may include some margins corresponding to changes in the currency exchange.

In this embodiment, the estimated price of the product Q may also be separated into portions based on the factors (e.g. the material and the steps) for clarity.

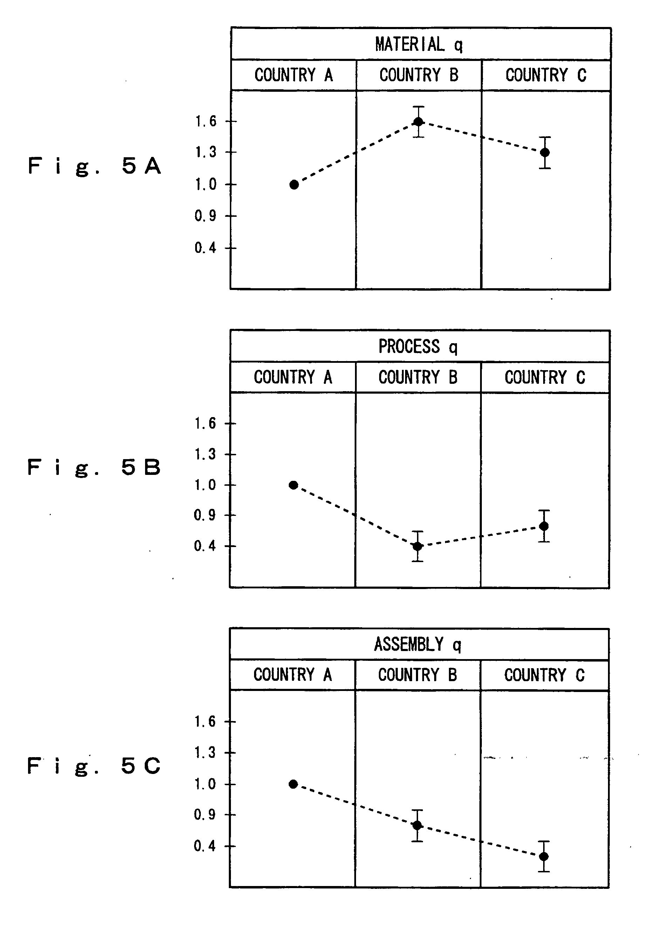

Through examining the result of the estimated prices shown in Figs. 5A, 5B and 5C, the operator easily acknowledges that the cost of the material q is the lowest in the country A, the cost of the processing step q is the lowest in the country B, and the cost of the assembly step q is the lowest in the country c. The overall cost of the product Q will hence be minimum when the material q is obtained from the country A, the processing step is carried out in the country B, and the assembly step is carried out in the country C.

As the embodiment allows the production cost database in each manufacturing site determined from different cost factors to be based on actual cost requirements at the manufacturing site, the estimated price can be accurate and authentic in the market of the manufacturing site.

The production cost database of the embodiment is determined depending on the difference production cost factors, such as thematerial and the processing step. This permits the estimated cost to be calculated with a more degree of freedom; for example, an initial stage of the production is carried out in the country B and its resultant half-product is subjected to a finish stage of the production in the country C.

The embodiment has the currency exchange table provided for converting the currency at each manufacturing site into a desired currency and the production cost database arranged for storing the cost data at the currency of each manufacturing site. This allows the production cost database to respond to a change in the currency exchange with not rewriting the data but simply modifying its conversion rate.

As described, the country B production cost database and the country C production cost database are provided in both the country B and the purchaser country (A) and in both the country C and the purchaser country (A) and updated by their respective countries B and C so that their copies are periodically transferred to the production cost database in the country A. The present invention is not limited to the above arrangement of the embodiment but may have both the country B production cost database and the country C production cost database provided only in the country A and arranged to be accessed by their corresponding countries B and C.

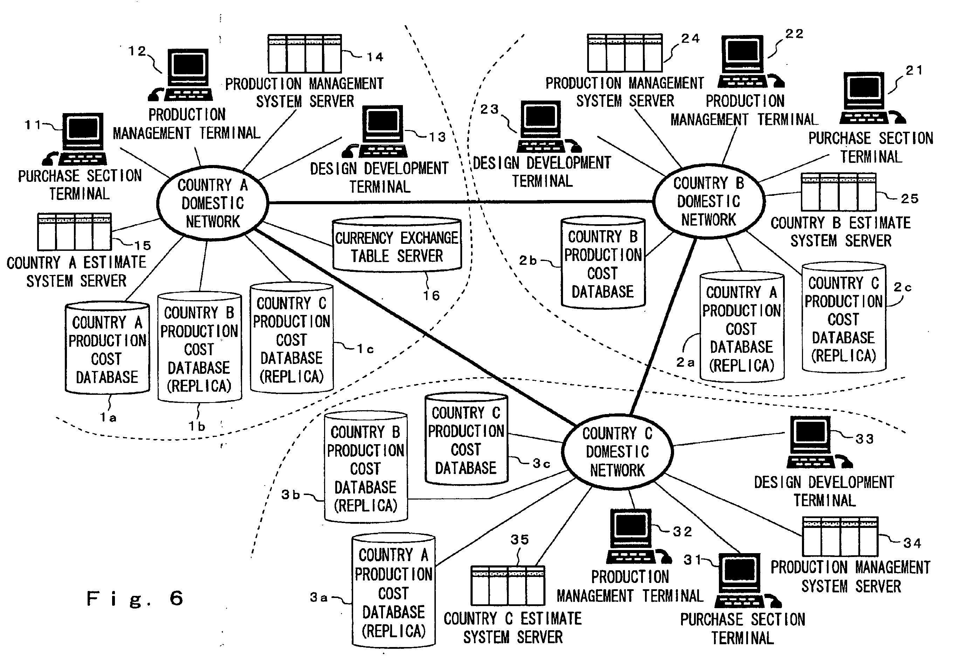

Fig. 6 is a block diagram of a second embodiment of the estimate evaluation system according to the present invention.

While the purchaser is the countryA in the first embodiment, the second embodiment permits the each country or manufacturing site to have the replicas of the production cost databases of the other countries as well as its own production cost database and the estimate system server. Accordingly, each country can receive the estimated price similar to the country A.

In the second embodiment, each of the manufacturing sites can be a purchaser and its production cost database can be multiplexed with different data thus contributing to improvement of the safety and the stability of the entire system.

### Industrial Applicability

As set forth above, the present invention has the following advantages.
(1) The relationship between the cost data and the production cost factors at each manufacturing site can dominantlybe managed by the purchaser, thus allowing the comparison of the estimated price between different manufacturing sites. Also, as the production cost database of eachmanufacturing site is constantly updated for modifying the estimated price, its cost data remain up-to-date.
(2) The system has the currency exchange table provided for converting the currency at each manufacturing site into a desired currency and the production cost database arranged for storing the cost data at the currency of each manufacturing site. This allows the production cost database to respond to a change in the currency exchange with not rewriting the data but simply modifying its conversion rate.
(3) The production cost database is determined depending on each processing step. This permits the estimated cost to be calculated with a more degree of freedom; for example, an initial stage of the production is carried out in the country B and its resultant half-product is subjected to a finish stage of the production in the country C.
(4) As each manufacturing site has the production cost databases of the othermanufacturing sites, it canbe apurchaser.
   Also, each of the production cost databases are practically multiplexed with various data, hence contributing to improvement of the safety and the stability of the entire system.

## Claims

1. An estimate evaluation system having a production cost database (1a, 1b, 1c) for storing the cost data of a product based on each production cost factor,
an estimating means (15) for calculating an estimated price of the product from the cost data stored in the production cost database, and
an estimated price output means (11) for outputting the estimated price, **characterized in that**
the production cost database stores the cost data of the product based on each production cost factor at each manufacturing site,
the estimating means calculates the estimated price of the product for each manufacturing site, and
the estimated price output means output the estimated price of the product for each manufacturing site.

2. An estimate evaluation system according to claim 1, further comprising a currency exchange table for converting the currency of each manufacturing site into a desired currency, wherein
the production cost database (1a, 1b, 1c) stores the cost data in each current of the manufacturing site based on each production cost factor, and
the estimating means (15) expresses the estimated price in desired currency according to the currency exchange table (16).

3. An estimate evaluation system according to claim 1 or 2, wherein
the production cost factors include production steps,
the estimating means calculates the estimated price for each production step, and
the estimated price output means for outputting the estimated price for each production step.

4. An estimate evaluation system according to any one of claims 1 through 3, wherein
the production cost database is provided at each manufacturing site,
the production cost database at each manufacturing site stores the cost data over every production cost factor which are pertinent to its manufacturing site and the other manufacturing sites, and
the manufacturing site updates its production cost database and also the production cost database about its cost data at each of the other manufacturing sites.
